# EUROPEAN PATENT SPECIFICATION

(11) **EP 2 670 583 B1**
(45) Date of publication and mention of the grant of the patent: **04.05.2016**
(21) Application number: 11702440.6
(22) Date of filing: 31.01.2011
(51) Int. Cl.: B29C 70/52

(54) **A PULTRUSION METHOD AND A PULTRUDER APPARATUS**
PULTRUSIONSVERFAHREN UND PULTRUDER ZUR HERSTELLUNG EINES PRODUKTES
PROCÉDÉ DE PULTRUSION ET APPAREIL DE PULTRUSION POUR LA PRODUCTION D'UN PRODUIT

(43) Date of publication of application: 11.12.2013
(73) Proprietor: VKR Holding A/S, 2970 Hørsholm (DK)
(72) Inventor: DRACHMANN HAAG, Michael, DK-6710 Esbjerg V (DK); NØRGAARD, Henry, DK-6950 Ringkøbing (DK); SCHLANDER, Per, DK-7100 Vejle (DK)
(86) International application number: PCT/EP2011/051325
(87) International publication number: WO 2012/103929

(56) References cited:
- WO-A1-2007/018130
- WO-A1-2007/107007
- JP-A- 7 068 544
- US-A- 5 747 075
- US-A1- 2002 063 349

## Description

The present invention relates to a method and an apparatus for pultrusion of a product, comprising pulling a number of fibres from a fibre supply, impregnating the fibres in an injection box with a heated resin, and thereafter pulling the impregnated fibres through a pultrusion die in order to cure the resin and thereby to form the product.

A pultrusion apparatus normally comprises a fibre supply for supplying a number of fibres, a resin reservoir, a resin feeder, an injection box, a pultrusion die and a pulling mechanism being arranged for pulling the fibres from the supply and through the injection box and the pultrusion die, and the fibres are being impregnated by the heated resin in the injection box and thereafter being pulled through the pultrusion die for curing the resin.

### Description of related prior art

Examples of pultrusion apparatuses of the kind mentioned above is known from e.g. US2002/063349, WO2007/018130, JP7068544, WO2007/107007, and US5747075 which mention pulling fibers and heating fibers and heating a resin, such as polyurethane, in order to initiate curing of the resin.

### Summary of the invention

It is a first aspect of the current invention to provide a pultrusion method and apparatus, providing further possibilities of reducing the length of the pultrusion die, or to increase the moulding speed.

According to the invention this is achieved by heating at least some of the fibres to a temperature being higher than the temperature of other fibres, before they are impregnated with the heated resin, and by using an apparatus as mentioned above, having a fibre heater arranged for providing such heating.

In this relation the term heating at least some of the fibres means heating the fibres to a temperature above the surrounding temperature around the fibres, and the term fibre heater means any kind of heating arrangement providing such heating of the fibres.

By fibres is furthermore meant any number of fibres, being separate from each other, or collected in bundles, e.g. as part of a fibre cloth, a fibre mat or the like.

This effect can further be achieved by heating at least some of the fibres to a temperature above the temperature of the resin, before the fibres are impregnated by the resin. Hereby it is furthermore possible to avoid heating the resin as the heated fibres may provide sufficient heat for obtaining the necessary temperature of the impregnated fibres.

As the temperature of the fibres and the resin is high, then it is possible to heat the first part of the pultrusion die facing the injection box to a temperature above the temperature of the fibres before they are impregnated with the resin.

The present invention is especially advantageous when using resin comprising two or more resin components being mixed in a mixing arrangement into a single resin, such as polyurethane. In this relation a good quality of the pultruded product can be achieved by heating at least some of the fibres to a temperature between 50 degrees Celsius and 100 degrees Celsius.

Further process improvement can be achieved if the components of the resin are heated to a temperature between 30 degrees Celsius and 70 degrees Celsius, more preferably between 30-50 degrees Celsius and even more preferably between 35 and 40 degrees Celsius, before being injected into the resin box.

A pultrusion apparatus according to the invention comprises a fibre supply for supplying a number of fibres, a resin reservoir, a resin feeder comprising a resin heater, an injection box, a pultrusion die, a pulling mechanism being arranged for pulling the fibres from the supply and through the injection box and the pultrusion die, and where the fibres are being impregnated by the heated resin in the injection box and thereafter being pulled through the pultrusion die for curing the resin. By having a fibre heater arranged for heating at least some of the fibres before they are impregnated in the injection box, then the temperature of the impregnated fibres will be much higher as the fibres normally constitutes about 50% or more of the finished product.

In an advantageous embodiment the fibre heater comprises at least two separate heating tunnels, each heating tunnel comprising a separate fibre heater arranged for heating the fibres being pulled through the tunnel. Hereby it is e.g. possible to heat the fibres that are to form part of the relatively thick portions of the pultruded product to a higher temperature than other parts that are to form part of relatively thin portions of the pultruded product.

Each fibre heater may further comprise means for adjusting and controlling the heating temperature.

Especially when using a resin comprising two or more resin components, then it is advantageous in order to ensure correct dosing of each resin component to use a separate flow controlled pump being connected to each resin container.

The invention is especially advantageous for pultruding profiles having sections with different cross sections comprising a first, relatively thick, cross section, and a second, relatively thin, cross section, In such situations the present invention provides a more even curing of the resin across the overall cross section of the profile, by arranging the fibres so that the percentage of fibres being heated to a relatively higher temperature than other fibres, is higher in the first cross section than in the second cross section.

### Brief description of the drawings

In the following, the invention will be described in greater detail with reference to embodiments shown by the enclosed figure. It should be emphasized that the embodiment shown are used for example purposes only and should not be used to limit the scope of the invention.
Figure 1 is a schematic representation of a pultrusion apparatus according to the present invention.
Figure 2 is a schematic representation of an example of a curing profile for a specific pultruded product, shown as a longitudinal cross section of the pultrusion tool along the travelling direction of the pultruded product.
Figure 3 is a transverse cross section of an example of a pultruded profile, showing temperature gradients in the pultruded profile at a selected place in the pultrusion die.

### Detailed description of the embodiments

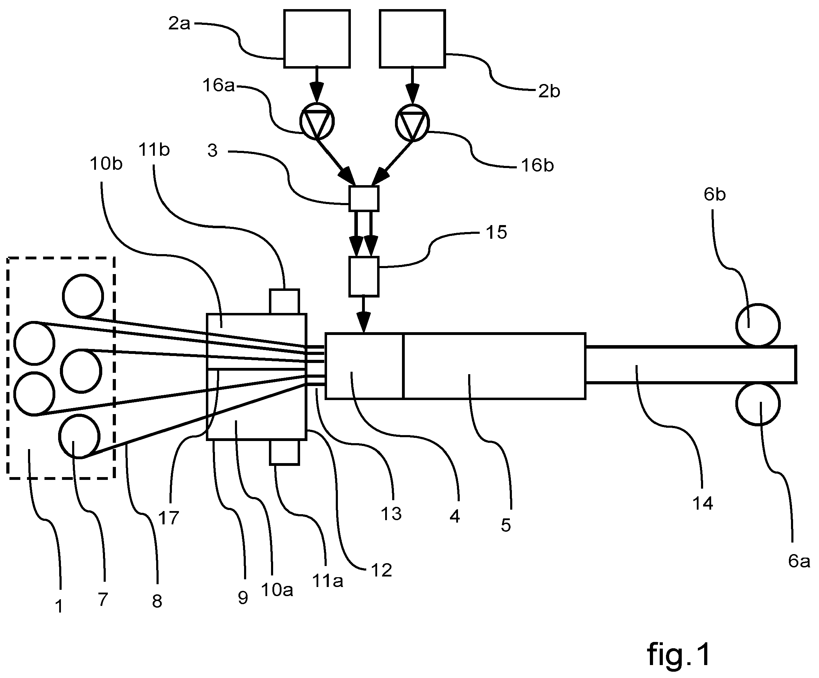

Figure 1 shows the principle of a pultrusion apparatus according to the present invention. Here the fibre supply 1 is a magazine having a large number of fibre spools 7 (only 5 spools shown in the figure). From each of the fibre spools 7, a fibre 8, a mat or a fibre cloth, e.g. made from glass, carbon, basalt or natural fibres, runs off and extends through a fibre heater 9. The fibres 8 extends through one of the tunnels 10a or 10b being separated by the wall 17, so that the heaters 11 a and 11 b can heat the fibres 8 to different temperatures depending on which tunnel 10a, 10b they extend through.

From the fibre heater the fibres 13 runs through a fibre guide 12, preferably comprising multiple holes arranged for leading and keeping the fibres in the correct place, and from which they can be collected in bundles, and the fibres extends into the injection box 4 where they are being impregnated by the resin being supplied from a resin mixing chamber 15. Thereafter the impregnated fibres are pulled e.g. by the pulling arrangement 6a, 6b, through the heated pultrusion die 5 for curing the resin, and thereby giving the product the selected shape, defined by to the interior shape of the pultrusion die.

As mentioned above the resin is supplied to the injection box 4 through a mixing chamber 15. In the shown embodiment the resin is a polyurethane comprising two resin components, polyol and isocyanate, being stored in separate resin containers 2a, 2b from which they are pumped by means of separate flow controlled pumps 16a, 16b through separate resin heaters 3, and thereafter the two resin components are mixed into a polyurethane resin in the mixing chamber 15 and further introduced into the injection box 4.

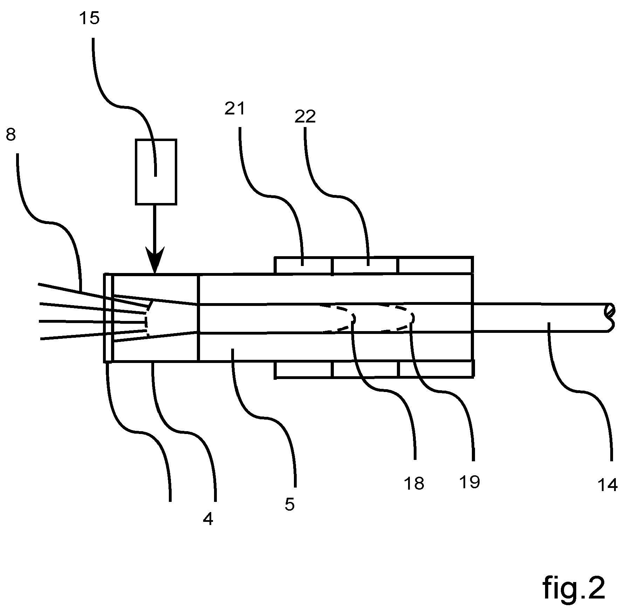

Fig. 2 shows a longitudinal cross section of the resin box 4 and the pultrusion die 5 shown in fig, 1, having the fibres 8, being impregnated by a heat curable resin in the resin box 4, and thereafter extending through the pultrusion die 5, where the impregnated fibres are cured to form the finished profile 14. In this figure is schematically shown examples of curing profiles 18, 19 illustrating respectively the border where the liquid resin begins the curing process and flows more like a gel, and the border where all the resin is almost fully cured.

In a profile having a cylindrical cross section, but also in other profiles, these borders will be close to parabolic, and thereby it is clear that there will be positions along the longitudinal direction of the profile, where only some of the resin is cured. This gives rise to either the risk of creating cracks or the like in the surface and the interior of the profile, or to the necessity of reducing the production speed of the process in order to avoid such crackings.

The primary reason for the parabolic shape of the curing borders 18, 19, is that the pultrusion die 5 is heated by means of at least one heater 21, 22 that heats from the outer surface of the pultrusion die.

As soon as the resin components, preferably polyol and isocyanate, are mixed together and injected into the resin box 4 the resin starts to react, and in the curing die 5 the insulating effect of the resin material itself creates a challenge of bringing the same amount of heat into the interior parts of the thicker cross sections as to the outer parts or the thinner cross sections. To continue raising the temperature of the heat sources 21, 22 of the curing die is not an option, because a to high temperature eventually can damage the material, so the practical solution has been to lower the process speed, meaning the speed by which the profiles are drawn through the pultrusion equipment.

In this relation the present invention provides the possibility of distributing the fibres having a relatively high temperature in the interior parts of the profile, so that the parabolic shape of the borders becomes more flat.

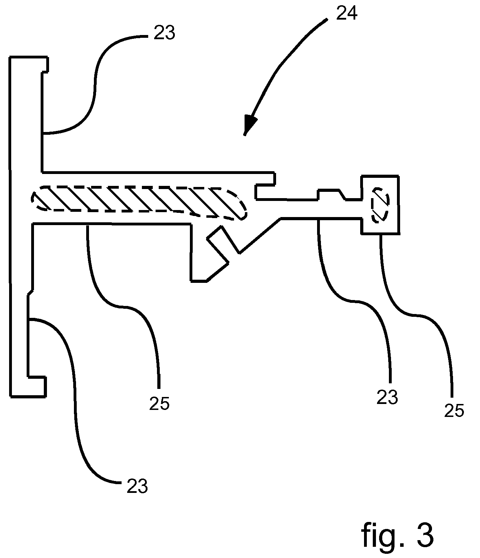

In fig. 3 this problem is further shown in relation to a profile 14 having a more complex cross section, and especially having a cross section comprising a relatively thick 25 cross section -of approximately 10 mm thickness - and a relatively thin 23 cross section - of approximately 4 mm thickness. Even in profiles with such relatively thin cross sections the difference in thickness leads to different curing degree when the process speed is maximised as much as possible under the process conditions.

In such a profile, the present invention provides the possibility of distributing relatively more fibres having a relatively high temperature in the relatively thick cross section, so that a more even curing of the profile is obtained- and thereby the process speed can be maximised further.

## Claims

1. A pultrusion method for producing a product, the pultrusion method comprising pulling a number of fibres (8) from a fibre supply (1), impregnating the fibres in an injection box (4) with a resin, and thereafter pulling the impregnated fibres through a pultrusion die (5),
**characterized by**
heating some of the fibres to a temperature being higher than the temperature of other fibres, before they are impregnated with the heated resin.

2. A method according to claim 1, **characterized by** heating the resin before it impregnates the fibres in the resin box.

3. A method according to claim 2, **characterized by** separating the fibres in a number of separate bundles, and by heating at least one separate bundle of fibres to a higher temperature than another separate bundle of fibres.

4. A method according to one or more of claims 1 to 3, **characterized by** controlling the heating of the fibres, so that the fibres has a predetermined temperature before they are impregnated with the resin.

5. A method according to claim 4, **characterized by** further controlling the heating of the resin components, so that they have a predetermined temperature before they are mixed and thereafter impregnates the fibres.

6. A method according to claim 4 or 5, **characterized by** heating at least some of the fibres to a temperature above the temperature of the resin, before the fibres are impregnated by the resin.

7. A method according to claim 6, **characterized by** heating the first part of the pultrusion die facing the injection box to a temperature above the temperature of the fibres before they are impregnated with the resin.

8. A method according to one or more of the preceding claims, **characterized in that** the resin comprises two resin components being mixed in a mixing arrangement into a single resin.

9. A method according to claim 8, **characterized in that** the resin is polyurethane.

10. A method according to one or more of the preceding claims, where the pultruded product has a first, relatively thick, cross section, and a second, relatively thin, cross section, **characterized by** arranging the fibres so that the percentage of fibres being heated to a relatively higher temperature than other fibres, is higher in the first cross section than in the second cross section.

11. A pultrusion apparatus comprising a fibre supply (1) for supplying a number of fibres (8), a resin reservoir (2a,2b), a resin feeder comprising a resin heater (3) adapted for heating the resin, an injection box (4), a pultrusion die (5), a pulling mechanism (6a,6b), being arranged for pulling the fibres (8) from the fibre supply (1) and through the injection box (4) and the pultrusion die (5), and where the fibres (8) are being impregnated by the resin in the injection box (4) and thereafter being pulled through the pultrusion die (5) for curing the resin, **characterized in that** it further comprises a fibre heater (9) arranged for heating some of the fibres (8) to a temperature being higher than the temperature of other fibres, before they are impregnated in the injection box (4), the fibre heater (9) comprises at least two separate heating tunnels (10a,10b), each heating tunnel (10a,10b) comprising a separate heaters (11a,11b) arranged for heating the fibres being pulled through the tunnel.

12. A pultrusion apparatus according to claim 11 **characterized in that** each heater (11a,11b) comprises means for adjusting and controlling the heating temperature.

13. A pultrusion apparatus according to one or more of claims 11 to 12, **characterized in that** the resin reservoir (2a,2b) comprises at least two resin components each being contained in a separate resin container (2a,2b), and where the resin feeder comprises a separate flow controlled pump (16a,16b) being connected to each resin container (2a,2b).

## Patentansprüche

1. Pultrusionsverfahren zum Herstellen eines Produkts, wobei das Pultrusionsverfahren das Ziehen einer Anzahl von Fasern (8) von einer Faserzufuhr (1), Imprägnieren der Fasern in einem Einspritzbehälter (4) mit einem Harz und danach Ziehen der imprägnierten Fasern durch ein Pultrusionswerkzeug (5) umfasst,
**gekennzeichnet durch**
Erwärmen einiger der Fasern auf eine Temperatur, die höher als die Temperatur anderer Fasern ist, bevor sie mit dem erwärmten Harz imprägniert werden.

2. Verfahren nach Anspruch 1, **gekennzeichnet durch** Erwärmen des Harzes, bevor es die Fasern in dem Faserbehälter imprägniert.

3. Verfahren nach Anspruch 2, **gekennzeichnet durch** Trennen der Fasern in eine Anzahl separater Bündel und **durch** Erwärmen mindestens eines separaten Faserbündels auf eine höhere Temperatur als ein anderes separates Faserbündel.

4. Verfahren nach einem oder mehreren der Ansprüche 1 bis 3, **gekennzeichnet durch** derartiges Steuern des Erwärmens der Fasern, dass die Fasern eine vorbestimmte Temperatur aufweisen, bevor sie mit dem Harz imprägniert werden.

5. Verfahren nach Anspruch 4, **gekennzeichnet durch** weiteres Steuern des Erwärmens der Harzbestandteile, sodass sie eine vorbestimmte Temperatur aufweisen, bevor sie gemischt werden, und danach die Fasern imprägnieren.

6. Verfahren nach Anspruch 4 oder 5, **gekennzeichnet durch** Erwärmen mindestens einiger der Fasern auf eine Temperatur über der Temperatur des Harzes, bevor die Fasern **durch** das Harz imprägniert werden.

7. Verfahren nach Anspruch 6, **gekennzeichnet durch** Erwärmen des ersten Teils des Pultrusionswerkzeugs, das dem Einspritzbehälter gegenüberliegt, auf eine Temperatur über der Temperatur der Fasern, bevor sie mit dem Harz imprägniert werden.

8. Verfahren nach einem der vorhergehenden Ansprüche, **dadurch gekennzeichnet, dass** das Harz zwei Harzbestandteile umfasst, die in einer Mischeinrichtung zu einem einzigen Harz gemischt werden.

9. Verfahren nach Anspruch 8, **dadurch gekennzeichnet, dass** das Harz Polyurethan ist.

10. Verfahren nach einem der vorhergehenden Ansprüche, wobei das pultrudierte Produkt einen ersten, relativ dicken Querschnitt und einen zweiten, relativ dünnen Querschnitt aufweist, **gekennzeichnet durch** derartiges Anordnen der Fasern, dass der Prozentanteil von Fasern, die auf eine relativ höhere Temperatur als andere Fasern erwärmt werden, in dem ersten Querschnitt höher ist als in dem zweiten Querschnitt.

11. Pultrusionsvorrichtung, umfassend eine Faserzufuhr (1) zum Zuführen einer Anzahl von Fasern (8), einen Harzsammelbehälter (2a, 2b), eine Harzzuführeinrichtung, die eine Harzheizeinrichtung (3) umfasst, die ausgelegt ist, das Harz zu erwärmen, einen Einspritzbehälter (4), ein Pultrusionswerkzeug (5), einen Ziehmechanismus (6a, 6b), der zum Ziehen der Fasern (8) von der Faserzufuhr (1) und durch den Einspritzbehälter (4) und das Pultrusionswerkzeug (5) angeordnet ist, wobei die Fasern (8) in dem Einspritzbehälter (4) mit dem Harz imprägniert werden und danach durch das Pultrusionswerkzeug (5) gezogen werden, um das Harz auszuhärten,
**dadurch gekennzeichnet, dass**
sie ferner eine Faserheizeinrichtung (9) umfasst, die zum Erwärmen einiger der Fasern (8) auf eine Temperatur, die höher als die Temperatur anderer Fasern ist, bevor sie in dem Einspritzbehälter (4) imprägniert werden, ausgelegt ist,
die Faserheizeinrichtung (9) mindestens zwei separate Heiztunnel (10a, 10b) umfasst, wobei jeder Heiztunnel (10a, 10b) separate Heizeinrichtungen (11a, 11b) umfasst, die zum Erwärmen der Fasern ausgelegt sind, die durch den Tunnel gezogen werden.

12. Pultrusionsvorrichtung nach Anspruch 11, **dadurch gekennzeichnet, dass** jedes Heizeinrichtung (11a, 11b) Mittel zum Einstellen und Steuern der Erwärmungstemperatur umfasst.

13. Pultrusionsvorrichtung nach einem oder mehreren der Ansprüche 11 bis 12, **dadurch gekennzeichnet, dass** der Harzsammelbehälter (2a, 2b) mindestens zwei Harzbestandteile umfasst, die in einem separaten Harzgefäß (2a, 2b) enthalten sind,
und wobei die Harzzuführeinrichtung eine separate
durchflussgeregelte Pumpe (16a, 16b) umfasst, die mit jedem Harzgefäß (2a, 2b) verbunden ist.

## Revendications

1. Procédé d'extrusion par étirage pour la production d'un produit, le procédé d'extrusion par étirage consistant à étirer un certain nombre de fibres (8) à partir d'une alimentation de fibres (1), imprégner les fibres dans une boîte d'injection (4) avec une résine, et ensuite étirer les fibres imprégnées à travers une filière d'extrusion par étirage (5),
**caractérisé par**
le chauffage de certaines fibres à une température qui est supérieure à la température d'autres fibres, avant qu'elles soient imprégnées avec la résine chauffée.

2. Procédé selon la revendication 1, **caractérisé par** le chauffage de la résine avant qu'elle imprègne les fibres dans la boîte à résine.

3. Procédé selon la revendication 2, **caractérisé par** la séparation des fibres en un certain nombre de faisceaux séparés et par le chauffage d'au moins un faisceau de fibres séparé à une température supérieure à celle d'un autre faisceau de fibres séparé.

4. Procédé selon l'une quelconque des revendications 1 à 3, **caractérisé par** la régulation du chauffage des fibres, de sorte que les fibres aient une température prédéfinie avant qu'elles soient imprégnées avec la résine.

5. Procédé selon la revendication 4, **caractérisé par** la régulation en outre du chauffage des composants résineux, de sorte qu'ils aient une température prédéfinie avant qu'ils soient mélangés et qu'ils imprègnent ensuite les fibres.

6. Procédé selon la revendication 4 ou 5, **caractérisé par** le chauffage d'au moins certaines des fibres à une température supérieure à la température de la résine, avant que les fibres soient imprégnées avec la résine.

7. Procédé selon la revendication 6, **caractérisé par** le chauffage de la première partie de la filière d'extrusion par étirage faisant face à la boîte d'injection à une température supérieure à la température des fibres avant qu'elles soient imprégnées avec la résine.

8. Procédé selon l'une quelconque des revendications précédentes, **caractérisé en ce que** la résine comprend deux composants résineux qui sont mélangés, dans un dispositif de mélange, en une résine unique.

9. Procédé selon la revendication 8, **caractérisé en ce que** la résine est un polyuréthane.

10. Procédé selon l'une quelconque des revendications précédentes, dans lequel le produit extrudé par étirage a une première section transversale relativement épaisse et une seconde section transversale relativement fine, **caractérisé par** l'arrangement des fibres de sorte que le pourcentage de fibres à chauffer à une température relativement plus élevée que d'autres fibres, est supérieur dans la première section transversale que dans la seconde section transversale.

11. Appareil d'extrusion par étirage comprenant une alimentation de fibres (1) pour alimenter un certain nombre de fibres (8), un réservoir de résine (2a, 2b), un dispositif d'alimentation de résine comprenant un dispositif de chauffage de résine (3) adapté pour chauffer la résine, une boîte d'injection (4), une filière d'extrusion par étirage (5), un mécanisme d'étirage (6a, 6b) qui est arrangé pour étirer les fibres (8) provenant de l'alimentation de fibre (1) et à travers la boîte d'injection (4) et la filière d'extrusion par étirage (5), et dans lequel les fibres (8) sont imprégnées par la résine dans la boîte d'injection (4) et sont ensuite étirées à travers la filière d'extrusion par étirage (5) pour durcir la résine,
**caractérisé en ce que**
il comprend en outre un dispositif de chauffage de fibres (9) arrangé pour le chauffage de certaines fibres (8) à une température qui est supérieure à la température d'autres fibres, avant qu'elles soient imprégnées dans la boîte d'injection (4),
le dispositif de chauffage de fibres (9) comprend au moins deux tunnels de chauffage (10a, 10b) séparés, chaque tunnel de chauffage (10a, 10b) comprenant des dispositifs de chauffage (11a, 11b) séparés arrangés pour le chauffage des fibres étirées à travers le tunnel.

12. Appareil d'extrusion par étirage selon la revendication 11, **caractérisé en ce que** chaque dispositif de chauffage (11a, 11b) comprend un moyen d'ajustement et de régulation de la température de chauffage.

13. Appareil d'extrusion par étirage selon la revendication 11 ou 12, **caractérisé en ce que** le réservoir de résine (2a, 2b) comprend au moins deux composants résineux, chacun étant contenu dans un réservoir de résine (2a, 2b) séparé,
et où le dispositif d'alimentation de résine comprend une pompe à débit régulé (16a, 16b) séparé qui est relié à chaque réservoir de résine (2a, 2b).
